# EUROPÄISCHE PATENTSCHRIFT

(11) **EP 0 568 012 B1**
(45) Veröffentlichungstag und Bekanntmachung des Hinweises auf die Patenterteilung: **09.12.1998**
(21) Anmeldenummer: 93106816.7
(22) Anmeldetag: 27.04.1993
(51) Int. Cl.: C07F 9/50, C07F 9/52

(54) **Bisphosphinoalkane**
Bisphosphino alkanes
Bisphosphino alcanes

(30) Priorität: 30.04.1992 DE 4214464
(43) Veröffentlichungstag der Anmeldung: 03.11.1993
(73) Patentinhaber: HOECHST AKTIENGESELLSCHAFT, 65926 Frankfurt am Main (DE)
(72) Erfinder: Kleiner, Hans-Jerg, Dr., W-6242 Kronberg/Ts. (DE); Kuchen, Wilhelm, Prof. Dr., W-4000 Düsseldorf (DE); Diemert, Klaus, Dr., W-4000 Düsseldorf (DE); Krautz, Guido, W-7920 Heidenheim (DE)

(56) Entgegenhaltungen:
- JP-A-58 213 745
- SU-A- 759 525
- US-A- 2 934 564
- US-A- 3 657 298
- US-A- 4 855 401
- JOURNAL OF ORGANOMETALLIC CHEMISTRY Bd. 94, Nr. 3 , 5. August 1975 , LAUSANNE CH Seiten 327 - 332 SAMUEL O. GRIM 'Unsymmetrical Bis-Phosphorus Ligands'

## Beschreibung

Die vorliegende Erfindung liegt auf dem Gebiet der phosphororganischen Verbindungen.

Bisphosphinoalkane werden als Katalysatoren oder als Bestandteile von Katalysatorsystemen insbesondere für die großtechnische Herstellung von Ethanol oder Aldehyden verwendet. Die selektive Herstellung von Ethanol gelingt gemäß den DE-A-3228769 und US-PS 4727200 durch Umsetzung von Methanol mit Kohlenmonoxid und Wasserstoff unter erhöhtem Druck mit Hilfe von Bisphosphinoalkanen. Ein weiteres technisch relevantes Verfahren in diesem Zusammenhang ist die katalytische Formylierung von Arylchloriden unter Bildung von Aldehyden in Gegenwart eines Palladium-Phosphan-Komplexes, wie in der EP-A-0 406 848 beschrieben.

Neben symmetrischen Bisphosphinoalkanen gewinnen auch unsymmetrische Bisphosphinoalkane in den vorstehend genannten technischen Prozessen an Bedeutung (US-PS 4727200). Nach S.O. Grim et al., J. Organometallic Chem. 94,327 (1975) werden unsymmetrische Bisphosphinoalkane durch Umsetzung von Chloralkyldiorganylphosphanen mit Grignard-Verbindungen und anschließende Umsetzung mit Monochlor-diorganylphosphanen hergestellt, jedoch sind die Ausbeuten nach diesem Verfahren gering.

Eine weitere Möglichkeit zur Synthese von unsymmetrischen Bisphosphinoalkanen ist von F.R. Benn et al. in Chem. Soc., Dalton Trans. 1984, 293 beschrieben. Hierbei wird zunächst ein unsymmetrisches Bisphosphoniumsalz hergestellt, das im nächsten Schritt zu dem entsprechenden Bisphosphanoxid umgesetzt und anschließend mit Trichlorsilan und Triethylamin zu dem gewünschten Produkt desoxygeniert wird. Nachteilig bei diesem Verfahren sind die geringen Ausbeuten sowie die schwierige Durchführung im technischen Maßstab.

Vorteilhaft wäre eine zentrale Schlüsselverbindung, von der ausgehend sich die Möglichkeit zur Synthese zahlreicher Bisphosphinoalkane bieten würde.

Der vorliegenden Erfindung liegt daher die Aufgabe zugrunde, eine solche zentrale Schlüsselverbindung mit möglichst hohen Ausbeuten zur Verfügung zu stellen.

Es wurde gefunden, daß Bisphosphinoalkane der Formel (I) 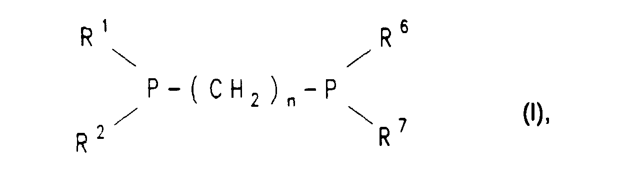 worin
R¹ und R² Alkylreste mit 1 bis 8, vorzugsweise 1 bis 6, Kohlenstoffatomen, substituierte oder unsubstituierte Phenylreste, vorzugsweise Phenyl-, Methoxyphenyl- oder Tolylreste, oder C₆-C₉-Aryl-C₁-C₃-alkylenreste, vorzugsweise C₆-C₇-Aryl-C₁-C₂-alkylenreste, bedeuten,
R⁶ und R⁷ unabhängig voneinander Halogen, vorzugsweise Chlor oder Brom, oder -NR⁴R⁵ bedeuten, wobei R⁴ und R⁵ unabhängig voneinander für Alkylreste mit 1 bis 5, vorzugsweise 1 bis 3, Kohlenstoffatomen stehen, und
n die Zahlen 3 oder 4, vorzugsweise 3, bedeutet,
der vorliegenden Aufgabe gerecht werden.

Gegenstand der vorliegenden Erfindung sind Bisphosphinoalkane der vorstehend definierten Formel (I). Gegenstand der Erfindung sind weiterhin Bisphosphinoalkane der nachstehend definierten Formeln (Ia), (Ib) und (Ic). Eine Verbindung der Formel (Ia) entspricht einer Verbindung der Formel (I), worin R⁶ und R⁷ jeweils Halogen, vorzugsweise Chlor oder Brom, bedeuten. Eine Verbindung der Formel (Ib) entspricht einer Verbindung der Formel (I), worin R⁶ Halogen, vorzugsweise Chlor oder Brom, und R⁷ NR⁴R⁵ bedeuten. Eine Verbindung der Formel (Ic) entspricht einer Verbindung der Formel (I), worin R⁶ und R⁷ jeweils NR⁴R⁵ bedeuten.

Gegenstand der vorliegenden Erfindung ist auch ein Verfahren zur Herstellung von Bisphosphinoalkanen der Formel (I), dadurch gekennzeichnet, daß
a) ein Phosphorigsäure-bis(dialkylamid)-halogenid der Formel (II) 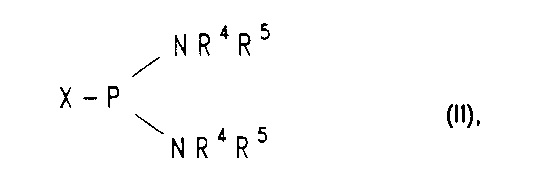 worin X ein Halogen, vorzugsweise Chlor oder Brom, und R⁴ und R⁵ die vorstehend genannten Bedeutungen haben,
   mit einer Grignard-Verbindung der Formel (III) 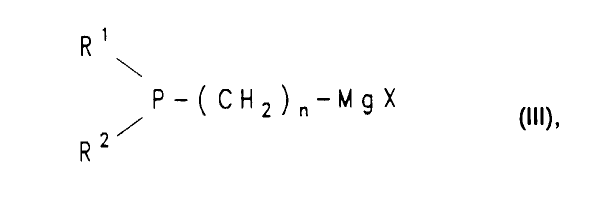 worin R¹, R², X und n die vorstehend genannten Bedeutungen haben, umgesetzt und anschließend
b) das aus der Umsetzung gemäß a) hervorgegangene Bisphosphinoalkan der Formel (Ic) 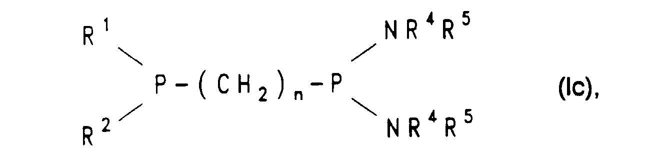 worin R¹, R², R⁴, R⁵ und n die vorstehend genannten Bedeutungen haben, mit einem Halogenwasserstoff HX, einem Phosphortrihalogenid PX₃ oder einer Verbindung der Formel (Ia), wobei X Halogen, vorzugsweise Chlor oder Brom, bedeutet, umgesetzt wird.

Die Umsetzung der Grignard-Verbindungen der Formel (III) mit den Phosphorigsäurebis(dialkylamid)halogeniden der Formel (II) zur Herstellung der Bisphosphinoalkane der Formel (Ic) erfolgt in inerten organischen Lösungsmitteln, beispielsweise Diethylether, Tetrahydrofuran, Dioxan oder Toluol in einem Temperaturbereich von -80° bis +80°C, bevorzugt -50° bis + 30°C. Vorteilhaft werden die Grignard-Verbindungen in die Phosphorigsäure-bis(dialkylamid)halogenide eingetropft. Nach beendeter Umsetzung werden die Magnesiumsalze abgetrennt. Es kann vorteilhaft sein, zur besseren Abtrennung der Magnesiumsalze sekundäre Amine wie Diethylamin oder Diisopropylamin zuzusetzen. Anschließend kann nach üblichen Aufarbeitungsmethoden, beispielsweise durch Destillation, das Endprodukt isoliert werden. Es sind jedoch auch Rohprodukte für die weitere Umsetzung einsetzbar.

Bevorzugte Phosphorigsäure-bis(dialkylamid)halogenide im Sinne der vorliegenden Erfindung sind:
Phosphorigsäure-bis(diethylamid)chlorid,
Phosphorigsäure-bis(diisopropylamid)chlorid und
Phosphorigsäure-bis(diisobutylamid)chlorid.

Grignard-Verbindungen der Formel (III) werden durch Umsetzung von Halogenalkyl-diorganylphosphanen der Formel R¹R²P-(CH₂)ₙ-X und Magnesium in üblicher Weise hergestellt, beispielsweise wie in S.O. Grim et al., J. Organometallic Chem. 94,327 (1975) beschrieben. Als Halogenalkyl-diorganylphosphane kommen beispielsweise in Frage:
3-Chlorpropyldiphenylphosphan, 3-Chlorpropylditolylphosphan, 3-Chlorpropyl-bis-2-methoxyphenylphosphan, 3-Brompropyl-4-methoxyphenyl-phenylphosphan,
3-Chlorpropyldibutylphosphan, 3-Chlorpropyl-di-tert.-butylphosphan, 3-Chlorpropyl-di-cyclohexylphosphan, 4-Chlorbutyldiphenylphosphan, 4-Chlorbutyl-di-tert.-butylphosphan.

Die auf diese Weise hergestellten Bisphosphinoalkane der Formel (Ic) können entweder mit einem Halogenwasserstoff HX oder mit einem Phosphortrihalogenid PX₃ zu den Bisphosphinoalkanen der Formeln (Ib) oder (Ia) umgesetzt werden, wobei HX vorzugsweise Chlorwasserstoff oder Bromwasserstoff und PX₃ vorzugsweise Phosphortrichlorid oder Phosphortribromid bedeuten.

Verbindungen der Formel (Ib) werden erfindungsgemäß nach folgendem Reaktionsschema hergestellt: 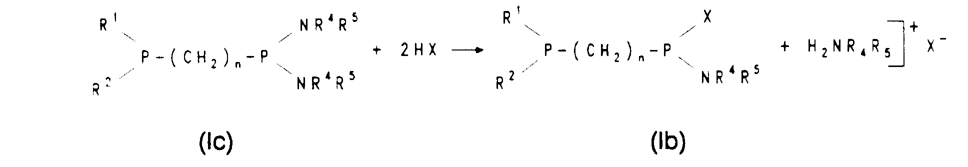 oder

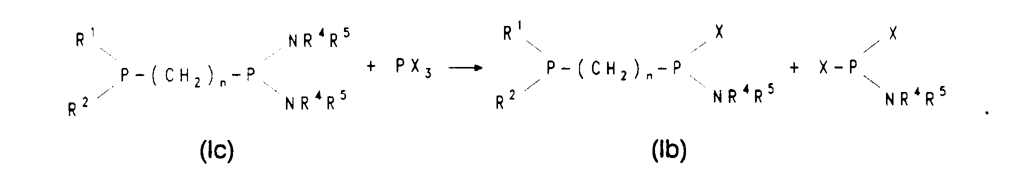

Die Herstellung der Verbindungen der Formel (Ib) kann auch durch Vermischen von äquimolaren Mengen der Verbindung (Ic) und der Verbindung (Ia) 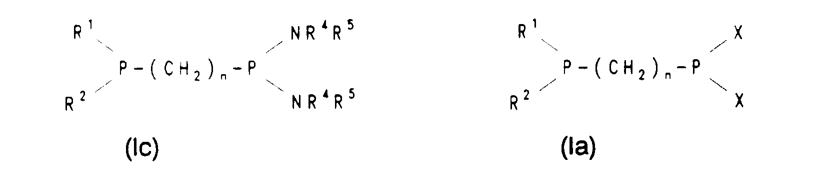 durchgeführt werden. Die Vermischung erfolgt im allgemeinen bei -20 bis +60°C, vorzugsweise bei etwa 20°C; als Lösungsmittel können Dichlormethan, Tetrahydrofuran, Diethylether, Dioxan, Acetonitril oder Toluol eingesetzt werden. Bevorzugt ist die Verwendung von Lösungsmitteln wie Tetrahydrofuran, die die Weiterverarbeitung der Reaktionsprodukte in einer Grignard-Reaktion gestatten.

Verbindungen der Formel (Ia) werden erfindungsgemäß nach folgendem Reaktionsschema hergestellt: 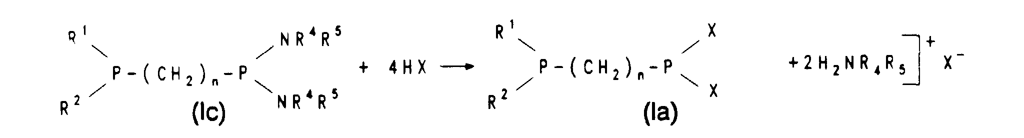 oder 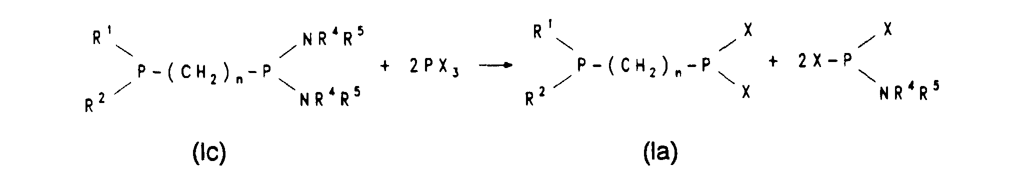 Bei der Umsetzung mit Halogenwasserstoff wird bevorzugt Chlorwasserstoff oder Bromwasserstoff eingesetzt. Die Bisphosphinoalkane der Formel (Ic) werden zweckmäßigerweise in inerten organischen Lösungsmitteln wie Diethylether, Tetrahydrofuran, Dioxan, Toluol oder Cyclohexan gelöst. Dann wird Halogenwasserstoff im Molverhältnis von 1,8:1 bis 2,2:1, vorzugsweise 2:1, zur Herstellung von Verbindungen der Formel (Ib) oder im Molverhältnis von 3,8:1 bis 4,2:1, vorzugsweise 4:1, zur Herstellung der Verbindungen der Formel (Ia) bei Temperaturen von -30 bis +80°C eingeleitet. Bevorzugt wird bei -10° bis +30°C gearbeitet. Nach beendeter Umsetzung wird von den Hydrohalogeniden des entsprechenden Dialkylamins abgetrennt und in üblicher Weise, beispielsweise durch Kristallisation oder Destillation, gereinigt.

Bei der Umsetzung mit Phosphortrihalogeniden wird bevorzugt Phosphortrichlorid eingesetzt. Das Phosphortrihalogenid wird mit dem Bisphosphinoalkan der Formel (Ic) im Molverhältnis von 0,8:1 bis 1,2:1, vorzugsweise 1:1, zur Herstellung von Verbindungen der Formel (Ib) oder im Molverhältnis von 1,8:1 bis 2,2:1, vorzugsweise 2:1, zur Herstellung der Verbindungen der Formel (Ia) durchgeführt und erfolgt in den oben genannten organischen Lösungsmitteln bei Temperaturen von 10 bis 100⁰C, bevorzugt 20 bis 70°C. Es ist vorteilhaft, in das Phosphortrihalogenid das Bisphosphinoalkan einzutropfen. Die Produkte können kristallin anfallen und dann direkt abgetrennt werden.

Bei dem erfindungsgemäßen Verfahren fällt Phosphorigsäuredialkylamid-dihalogenid als Nebenprodukt an, welches zur Herstellung des Phosphorigsäurebis(dialkylamid)halogenids der allgemeinen Formel (II) wiederverwendet werden kann. Aus diesem Grunde ist das erfindungsgemäße Verfahren technisch besonders wertvoll.

Die erfindungsgemäßen Bisphosphinoalkane der Formel (I) können zu technisch wertvollen Verbindungen der Formel (IV) 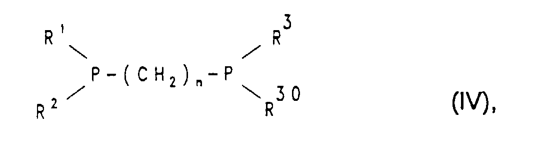 worin R¹, R² und n die vorstehend genannten Bedeutungen und R³ und R³⁰ die für R¹ und R² genannten Bedeutungen haben und worin R³ und R³⁰ vorzugsweise von R¹ und R² verschieden sind, durch Umsetzung mit Grignard-Verbindungen weiterverarbeitet werden.

Gegenstand der vorliegenden Erfindung ist deshalb auch die Verwendung von Verbindungen der Formel (I) zur Herstellung von Verbindungen der Formel (IV).

### Beispiele:

### 1a) Bis-(N,N-diethylamino)-3-(diphenylphosphino)propylphosphan

78,8 g (0,3 Mol) 3-Chlorpropyldiphenylphosphan, hergestellt gemäß S.O. Grim, J. Organometallic Chemistry 94,327 (1975) aus Triphenylphosphan und 1,3-wurden in 150 ml Tetrahydrofuran gelöst und mit 7,29 g (0,3 Mol) Magnesiumspänen in üblicher Weise mit Hilfe von Jodkristallen zur Grignardverbindung umgesetzt. Diese Grignardlösung wurde direkt nach Fertigstellung bei -50°C zu einer Lösung von 63,2 g (0,3 Mol) Phosphorigsäurebis(diethylamid)chlorid in 300 ml Diethylether unter lebhaftem Rühren zugetropft. Nach beendeter Reaktion ließ man auf etwa 20°C erwärmen und versetzte das Reaktionsgemisch mit 100 ml Dioxan. Der Niederschlag wurde abfiltriert und das Filtrat von den Lösungsmitteln destillativ befreit. Man erhielt 97 g des gewünschten Produktes (80 % der Theorie). Die Reinigung erfolgte durch Destillation: Siedepunkt bei 0,0026 kPa: 210-215°C.

| Analyse: | | | | | |
|---|---|---|---|---|---|
| C₂₃H₃₆N₂P₂ | berechnet | 68,63 % C | 8.94 % H | 6,96 % N | 15,40 % P |
| (402,5) | gefunden | 68,34 % C | 8.84 % H | 6.88 % N | 15.30 % P |

### b) Dichlor-3-(diphenylphosphino)propylphosphan

8,25 g (0,06 Mol) Phosphortrichlorid wurden in 50 ml Toluol gelöst und unter Rühren portionsweise 12,1 g (0,03 Mol) Bis (N,N-diethylamino)-(3-diphenylphosphino)propylphosphan aus Beispiel 1a) zugegeben. Nach kurzer Zeit fielen Kristalle aus. Man erhielt 8,4 g Dichlor-3-(diphenylphosphino)propylphosphan (85 % d. Th.). Nach Umkristallisation aus Toluol war der Schmelzpunkt 126-129°C unter Zersetzung.

| Analyse: | | | | | |
|---|---|---|---|---|---|
| C₁₅H₁₆Cl₂P₂ | berechnet | 54,72 % C | 4,86 % H | 21,58 % Cl | 18,84 % P |
| (329) | gefunden | 54,72 % C | 4,78 % H | 21,53 % Cl | 18,71 % P |

### 2a) 3-Chlorpropyl-di(tert.-butyl)phosphan

31,4 g (0,25 Mol)Di-(tert.-butyl)phosphan wurden analog zu E. Arpac et al. Z. Naturforsch. 35 b (1980), 146 in 200 ml Tetrahydrofuran gelöst. Unter Eiskühlung ließ man innerhalb 30 Minuten 137 ml einer 1,57 molaren Lösung von n-Butyllithium in Hexan (0,215 Mol) tropfen. Die resultierende Lösung wurde eine Stunde bei etwa 20°C nachgerührt und anschließend bei -70°C innerhalb 4 Stunden unter kräftigem Rühren zu 100 ml 1,3-Dichlorpropan, gelöst in 300 ml Toluol, getropft. Nach Erwärmen auf etwa 20⁰C wurde nachgerührt. Nach beendeter Umsetzung wurden die Lösungsmittel weitgehend destillativ entfernt und das ausgefallene Lithiumchlorid durch Waschen mit Wasser entfernt. Die organische Phase wurde über Natriumsulfat getrocknet und die restlichen Lösungsmittel destillativ entfernt. Man erhielt 43,8 g eines gelblichen, viskosen Öls.

| Analyse: | | | | | |
|---|---|---|---|---|---|
| C₁₁H₂₄ClP | berechnet | 59,33 % C | 10,79 % H | 15,96 % Cl | 13,93 % P |
| (222,5) | gefunden | 59,31 % C | 10,80 % H | 14,71 % Cl | 13,20 % P |

### b) Bis(N,N-diethylamino)-[3-di-(tert.-butyl)phosphinopropyl]-phosphan

66,8 g (0,3 Mol) 3-Chlorpropyl-di(tert.-butyl)phosphan wurden in 150 ml Tetrahydrofuran mit 7,29 g (0,3 Mol) Magnesiumspänen in üblicher Weise mit Hilfe von Jodkristallen zur Grignardverbindung umgesetzt. Diese Grignardlösung wurde direkt nach Fertigstellung bei -50°C zu einer Lösung von 63,2 g (0,3 Mol) Phosphorigsäurebis(diethylamid)-chlorid in 300 ml Diethylether unter lebhaftem Rühren zugetropft.

Nach beendeter Reaktion ließ man auf etwa 20⁰C kommen und versetzte das Reaktionsgemisch mit 20 ml Diethylamin und 100 ml Dioxan. Der Niederschlag wurde abfiltriert und das Filtrat destillativ von dem Lösungsmittel befreit. Man erhielt etwa 75 g des gewünschten Produktes (ca. 70 % der Theorie). Eine Feinreinigung erfolgte durch Destillation: Siedepunkt bei 0,0065 kPa: 150-160°C.

| Analyse: | | | | | |
|---|---|---|---|---|---|
| C₁₉H₄₄N₂P₂ | berechnet | 52,49 % C | 12,16 % H | 7,74 % N | 17,18 % P |
| (362) | gefunden | 52,31 % C | 12,00 % H | 7,51 % N | 17,03 % P |

### c) Dichlor-3-[di-(tert.-butyl)phosphino]propylphosphan

8,25 g (0,06 Mol) Phosphortrichlorid wurden in 50 ml Toluol gelöst und unter Rühren portionsweise 10,9 g (0,03 Mol) Bis(N,N-diethylamino)-[3-di-(tert.butyl)phosphinopropyl]phosphan zugegeben. Nach kurzer Zeit fielen Kristalle aus. Man erhielt 6,1 g des gewünschten Produktes (ca. 70 % d. Th.). Nach Umkristallisation aus Toluol war der Schmelzpunkt 141-142°C unter Zersetzung.

| Analyse: | | | | | |
|---|---|---|---|---|---|
| C₁₁H₂₄Cl₂P₂ | berechnet | 45,68 % C | 8,30 % H | 24,57 % Cl | 21,45 % P |
| (289) | gefunden | 45,71 % C | 8,30 % H | 23,05 % Cl | 20,90 % P |

### d) Chlor-diethylamino-3-[di-(tert.-butyl)phosphino]propylphosphan

1 mMol des Dichlorphosphans aus Beispiel 2c) wurden in 5 ml Dichlormethan gelöst und tropfenweise unter Rühren mit 1 mMol des Bisaminophosphans aus Beispiel 2b) versetzt.
³¹P{¹H}-NMR:
δp= 140,4 (d, ¹Jpp=88,8 Hz, P(NEt₂)Cl)
δp= 29,5 (d, ¹Jpp=88,8 Hz, P-(tert.-Bu)₂)

## Patentansprüche

1. Bisphosphinoalkan der Formel (I) 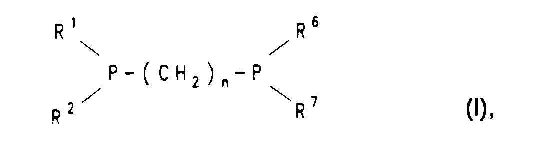 worin
R¹ und R² Alkylreste mit 1 bis 8 Kohlenstoffatomen, substituierte oder unsubstituierte Phenylreste oder C₆-C₉-Aryl-C₁-C₃-alkylenreste, R⁶ und R⁷ unabhängig voneinander Halogen oder NR⁴R⁵, wobei R⁴ und R⁵ unabhängig voneinander für Alkylreste mit 1 bis 5 Kohlenstoffatomen stehen, und
n die Zahlen 3 oder 4 bedeuten.

2. Bisphosphinoalkan gemäß Anspruch 1, dadurch gekennzeichnet, daß R¹ und R² Alkylreste mit 1 bis 6 Kohlenstofftatomen, Phenyl, Methoxyphenyl, Tolyl oder C₆-C₇-Aryl-C₁-C₂-alkylenreste,
R⁶ und R⁷ unabhängig voneinander jeweils Chlor, Brom oder NR⁴R⁵, worin R⁴ und R⁵ für Alkylreste mit 1 bis 3 Kohlenstoffatomen stehen, und
n die Zahl 3 bedeuten.

3. Bisphosphinoalkan nach Anspruch 1 oder 2, dadurch gekennzeichnet, daß R⁶ und R⁷ jeweils Halogen, vorzugsweise Chlor oder Brom, bedeuten.

4. Bisphosphinoalkan nach Anspruch 1 oder 2, dadurch gekennzeichnet, daß R⁶ Halogen, vorzugsweise Chlor oder Brom, und R⁷ NR⁴R⁵ bedeuten.

5. Bisphosphinoalkan nach Anspruch 1 oder 2, dadurch gekennzeichnet, daß R⁶ und R⁷ jeweils NR⁴R⁵ bedeuten.

6. Verfahren zur Herstellung von Bisphosphinoalkanen der Formel (I) gemäß Anspruch 1, dadurch gekennzeichnet, daß man
a) ein Phosphorigsäurebis(dialkylamid)-halogenid der Formel (II) 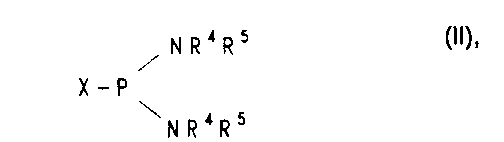 worin X ein Halogen, vorzugsweise Chlor oder Brom, und R⁴ und R⁵ die in Anspruch 1 genannten Bedeutungen haben,
mit einer Grignard-Verbindung der Formel (III) 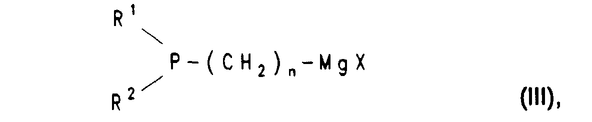 worin X ein Halogen, vorzugsweise Chlor oder Brom R¹, R² und n die in Anspruch 1 genannten Bedeutungen haben, umsetzt und anschließend
b) das aus der Umsetzung gemäß a) hervorgegangene Bisphosphinoalkan der Formel (Ic) 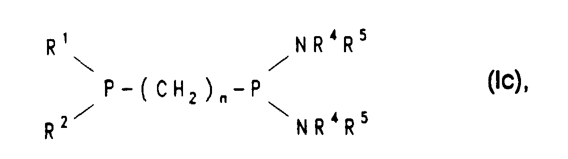 worin R¹, R², R⁴, R⁵ und n die vorstehend genannten Bedeutungen haben, mit einem Halogenwasserstoff HX, einem Phosphortrihalogenid PX₃ oder einer Verbindung der Formel (Ia), 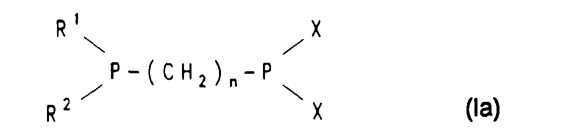 wobei X Halogen, vorzugsweise Chlor oder Brom, bedeutet, umsetzt.

7. Verfahren nach Anspruch 6 zur Herstellung eines Bisphosphinoalkans nach Anspruch 4, dadurch gekennzeichnet, daß man ein Bisphosphinoalkan der Formel (Ic) mit einem Bisphosphinoalkan der Formel (Ia) in äquimolaren Mengen vermischt.

8. Verfahren nach Anspruch 6 zur Herstellung eines Bisphosphinoalkans nach Anspruch 4, dadurch gekennzeichnet, daß man das Bisphosphinoalkan der Formel (Ic) mit Chlorwasserstoff oder Bromwasserstoff im Molverhältnis von 1:1,8 bis 1:2,2, vorzugsweise 1:2, oder mit Phosphortrichlorid oder Phosphortribromid im Molverhältnis von 0,8:1 bis 1,2:1, vorzugsweise 1:1, umsetzt.

9. Verfahren nach Anspruch 6 zur Herstellung eines Bisphosphinoalkans nach Anspruch 3, dadurch gekennzeichnet, daß man das Bisphosphinoalkan der Formel (Ic) mit Chlorwasserstoff oder Bromwasserstoff im Molverhältnis von 1:3,8 bis 1:4,2, vorzugsweise 1:4, oder mit Phosphortrichlorid oder Phosphortribromid im Molverhältnis von 1:1,8 bis 1:2,2, vorzugsweise 1:2, umsetzt.

10. Verfahren nach mindestens einem der Ansprüche 6 bis 9, dadurch gekennzeichnet, daß
X Chlor oder Brom,
R⁴ und R⁵ Alkylreste mit 1 bis 3 Kohlenstoffatomen,
R¹ und R² Alkylreste mit 1 bis 6 Kohlenstoffatomen oder Phenyl und
n die Zahl 3 bedeuten.

11. Verwendung der Bisphosphinoalkane der Formel (I) nach mindestens einem der Ansprüche 1 bis 5 zur Herstellung von Verbindungen der Formel (IV) 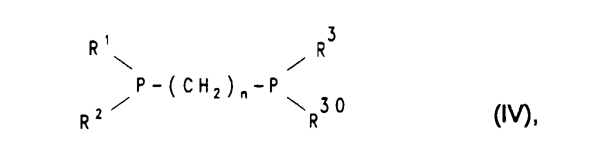 worin
R¹, R² und n die in Anspruch 1 oder 2 genannten Bedeutungen und R³ und R³⁰ die für R¹ und R² genannten Bedeutungen haben, und worin R³ und R³⁰ vorzugsweise von R¹ und R² verschieden sind.

## Claims

1. A bisphosphinoalkane of the formula (I) 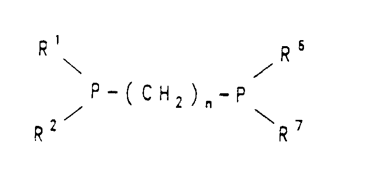 where
R¹ and R² are alkyl radicals having 1 to 8 carbon atoms, substituted or unsubstituted phenyl radicals or C₆-C₉-aryl-C₁-C₃-alkylene radicals, R⁶ and R⁷ are, independently of one another, halogen or NR⁴R⁵, where
R⁴ and R⁵ are, independently of one another, alkyl radicals having 1 to 5 carbon atoms, and
n is 3 or 4.

2. A bisphosphinoalkane as claimed in claim 1, wherein R¹ and R² are alkyl radicals having 1 to 6 carbon atoms, phenyl, methoxyphenyl, tolyl or C₆-C₇-aryl-C₁-C₂-alkylene radicals,
R⁶ and R⁷ are, independently of one another, in each case chlorine, bromine or NR⁴R⁵, where R⁴ and R⁵ are alkyl radicals having 1 to 3 carbon atoms, and n is 3.

3. A bisphosphinoalkane as claimed in claim 1 or 2, wherein R⁶ and R⁷ are in each case halogen, preferably chlorine or bromine.

4. A bisphosphinoalkane as claimed in claim 1 or 2, wherein R⁶ is halogen, preferably chlorine or bromine, and R⁷ is NR⁴R⁵.

5. A bisphosphinoalkane as claimed in claim 1 or 2, wherein R⁶ and R⁷ are in each case NR⁴R⁵.

6. A process for preparing bisphosphinoalkanes of the formula (I) as claimed in claim 1, wherein
a) a bis(dialkylamido)phosphorous halide of the formula (II) 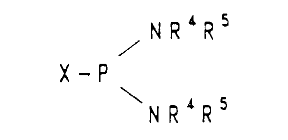 where X is a halogen, preferably chlorine or bromine, and R⁴ and R⁵ are as defined in claim 1, is reacted with a Grignard compound of the formula (III) 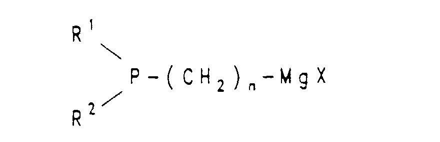 where X is halogen, preferably clorine or bromine, R¹, R² and n are as defined in claim 1, and then
b) the bisphosphinoalkane of the formula (Ic) obtained from the reaction according to a) 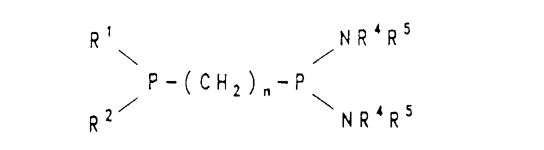 where R¹, R², R⁴, R⁵ and n are as defined above, is reacted with a hydrogen halide HX, a phosphorus trihalide PX₃ or a compound of the formula (Ia), 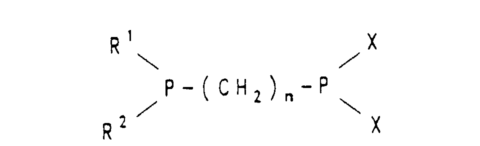 X being halogen, preferably chlorine or bromine.

7. The process as claimed in claim 6 for preparing a bisphosphinoalkane as claimed in claim 4, wherein a bisphosphinoalkane of the formula (Ic) is mixed in equimolar amounts with a bisphosphinoalkane of the formula (Ia).

8. The process as claimed in claim 6 for preparing a bisphosphinoalkane as claimed in claim 4, wherein the bisphosphinoalkane of the formula (Ic) is reacted with hydrogen chloride or hydrogen bromide in a molar ratio of from 1:1.8 to 1:2.2, preferably 1:2, or with phosphorus trichloride or phosphorus tribromide in a molar ratio of from 0.8:1 to 1.2:1, preferably 1:1.

9. The process as claimed in claim 6 for preparing a bisphosphinoalkane as claimed in claim 3, wherein the bisphosphinoalkane of the formula (Ic) is reacted with hydrogen chloride or hydrogen bromide in a molar ratio of from 1:3.8 to 1:4.2, preferably 1:4, or with phosphorus trichloride or phosphorus tribromide in a molar ratio of from 1:1.8 to 1:2.2, preferably 1:2.

10. The process as claimed in at least one of claims 6 to 9, wherein
X is chlorine or bromine,
R⁴ and R⁵ are alkyl radicals having 1 to 3 carbon atoms,
R¹ and R² are alkyl radicals having 1 to 6 carbon atoms or phenyl, and
n is 3.

11. The use of the bisphosphinoalkanes of the formula (I) as claimed in at least one of claims 1 to 5 for preparing compounds of the formula (IV) 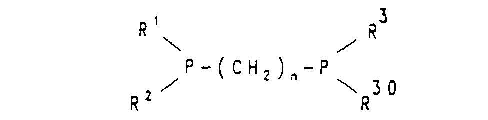 where
R¹, R² and n are as defined in claim 1 or 2, and R³ and R³⁰ are as defined for R¹ and R², and where R³ and
R³⁰ are preferably different from R¹ and R².

## Revendications

1. Bisphoshinoalcane de formule (I) 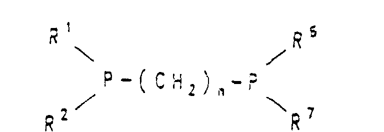 dans laquelle
R¹ et R² représentent des restes alkyle avec 1 à 8 atomes de carbone, des restes phényle substitué ou non substitué, ou des restes (aryl en C₆-C₉)-(alkylène en C₁-C₃), R⁶ et R⁷, indépendamment l'un de l'autre, représentant un atome d'halogène ou -NR⁴R⁵, R⁴ et R⁵, indépendamment l'un de l'autre, représentent des restes alkyle avec 1 à 5 atomes de carbone et
n vaut 3 ou 4.

2. Bisphosphinoalcane selon la revendication 1, caractérisé en ce que R¹ et R² sont des restes alkyle avec 1 à 6 atomes de carbone, phényle, méthoxyphényle, tolyle ou (aryl en C₆-C₇)-(alkylène en C₁-C₂),
R⁶ et R⁷, indépendamment l'un de l'autre représentent chacun un atome de chlore, de brome ou -NR⁴R⁵, où R⁴ et R⁵ représentent des restes alkyle avec 1 à 3 atomes de carbone et n vaut 3.

3. Bisphosphinoalcane selon la revendication 1 ou 2, caractérisé en ce que R⁶ et R⁷, chacun représente un atome d'halogène, de préférence le chlore ou le brome.

4. Bisphosphinoalcane selon la revendication 1 ou 2, caractérisé en ce que R⁶ représente un atome d'halogène, de préférence le chlore ou le brome, et R⁷ représente -NR⁴R⁵.

5. Bisphosphinoalcane selon la revendication 1 ou 2, caractérisé en ce que R⁶ et R⁷ chacun représentent -NR⁴R⁵.

6. Procédé pour la préparation de bisphophinoalcanes de formule (I) selon la revendication 1, caractérisé en ce que l'on fait réagir
a) un halogénure de bis(dialkylamide) d'acide phosphoreux de formule (II) 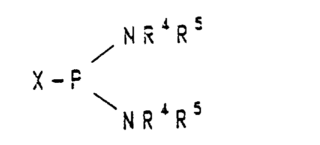 dans laquelle X est un atome d'halogène, de préférence le chlore ou le brome, et R⁴ et R⁵ ont les significations données dans la revendication 1, avec un composé de Grignard de formule (III) 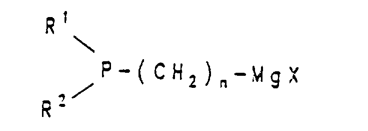 dans laquelle X est un atome d'halogène, de préférence le chlore ou le brome, R¹, R² et n ont les significations données dans la revendicaiton 1, et ensuite
b) on fait réagir le bisphosphinoalcane, obtenu par la réaction a), de formule (Ic), 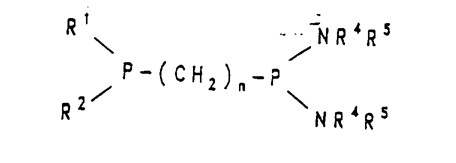 dans laquelle R¹, R², R⁴, R⁵ et n ont les significations précitées, avec un halogénure d'hydrogène HX, un trihalogénure de phosphore PX₃ ou un composé de formule (Ia) 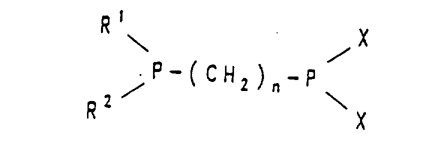 X étant un atome d'halogène, de préférence le chlore ou le brome.

7. Procédé selon la revendication 6, pour la préparation d'un bisphosphinoalcane selon la revendication 4, caractérisé en ce que l'on mélange un bisphosphinoalcane de formule (Ic) avec un bisphosphinoalcane de formule (la) en quantités équimolaires.

8. Procédé selon la revendication 6 pour la préparation d'un bisphophinoalcane selon la revendication 4, caractérisé en ce que l'on fait réagir le bisphosphinoalcane de formule (Ic) avec du chlorure d'hydrogène ou le bromure d'hydrogène dans un rapport molaire de 1:1,8 à 1:2,2, de préférence de 1:2, ou avec du trichlorure de phosphore ou du tribromure de phosphore dans un rapport molaire de 0,8:1 à 1,2:1 de préférence de 1:1.

9. Procédé selon la revendication 6 pour la préparation d'un bispohosphinoalcane selon la revendication 3, caractérisé en ce que l'on fait réagir le bisphosphinoalcane de formule (Ic) avec du chlorure d'hydrogène ou du bromure d'hydrogène dans un rapport molaire de 1:3,8 à 1:4,2, de préférence de 1:4, ou avec du trichlorure de phosphore ou du tribromure de phosphore dans un rapport molaire de 1:1,8 à 1:2,2, de préférence de 1:2.

10. Procédé selon au moins l'une des revendications 6 à 9, caractérisé en ce que
X représente le chlore ou le brome,
R⁴ et R⁵ représentent des restes alkyle avec 1 à 3 atomes de carbone,
R¹ et R² représentent des restes alkyle avec 1 à 6 atomes de carbone ou phényle et
n vaut 3.

11. Utilisation des bisphosphinoalcanes de formule (I) selon au moins l'une des revendications 1 à 5 pour la préparation de composés de formule (IV) 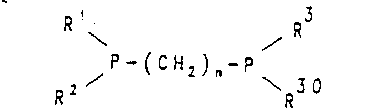 dans laquelle
R¹, R² et n ont les significations données dans la revendication 1 ou 2 et R³ et R³⁰ ont les significations citées pour R¹ et R², et dans laquelle R³ et R³⁰ sont de préférenbce différents de R¹ et R².
